# EUROPÄISCHE PATENTSCHRIFT

(11) **EP 4 685 291 B1**
(45) Veröffentlichungstag und Bekanntmachung des Hinweises auf die Patenterteilung: **18.11.2026**
(21) Anmeldenummer: 25222469.6
(22) Anmeldetag: 31.01.2022
(51) Int. Cl.: E01C 19/48

(54) **STRASSENBAUMASCHINE MIT PHOTOVOLTAIKANLAGE**
ROAD CONSTRUCTION MACHINE WITH PHOTOVOLTAIC SYSTEM
ENGIN DE CONSTRUCTION ROUTIÈRE AVEC INSTALLATION PHOTOVOLTAÏQUE

(43) Veröffentlichungstag der Anmeldung: 28.01.2026
(62) Dokumentnummer(n) der früheren Anmeldung(en) nach Art. 76 EPÜ: 22154287.1 / 4 219 833
(73) Patentinhaber: Joseph Vögele AG, 67067 Ludwigshafen (DE)
(72) Erfinder: ANGERMANN, Nicole, 68782 Brühl (DE)
(74) Vertreter: Grünecker Patent- und Rechtsanwälte PartG mbB

(56) Entgegenhaltungen:
- EP-A1- 0 685 363
- EP-A2- 1 110 779
- CN-U- 205 917 579
- CN-U- 207 121 794
- CN-U- 207 143 686
- CN-U- 211 113 048
- US-A1- 2017 063 290

## Beschreibung

Die vorliegende Erfindung betrifft eine Kombination zweier Straßenbaumaschinen , nämlich eines Straßenfertigers und eines Beschickerfahrzeugs für einen Straßenfertiger.

Straßenfertiger werden dazu eingesetzt, auf einem Platz, einem Weg oder einer Straße einen Belag aus Einbaumischgut aufzubringen, beispielsweise aus Beton, bituminösem Einbaumischgut oder Asphalt. Solch ein Straßenfertiger weist üblicherweise einen Gutbunker auf, um eine bestimmte Menge von Einbaumischgut zu speichern. Wenn die Speicherkapazität erhöht werden soll, wird ein Beschicker in Arbeitsrichtung vor den Straßenfertiger gesetzt. Dieser Beschicker umfasst einen weiteren Gutbunker sowie eine Fördereinrichtung, um Einbaumaterial aus dem Beschicker-Gutbunker in den Gutbunker des Straßenfertigers zu transportieren.

Die Straßenbaumaschinen haben einen erheblichen Energieverbrauch. Das Stromnetz in den herkömmlichen Straßenbaumaschinen mit Verbrennungsmotor ist in der Regel durch einen Generator gespeist, welcher mit teuren fossilen Energieträgern angetrieben wird. Folglich ist es gewünscht, die Betriebskosten der Straßenbaumaschine zu reduzieren.

Kraftfahrzeuge mit Solarmodulen sind aus EP 1 110 779 A2 und EP 0 685 363 A1 bekannt, sowie ferner aus der US2017/0063290 A1. Straßenfertiger mit Solarstromerzeugung gehen hervor aus CN 207 121 794 U, CN 205 917 579 U oder CN 207 143 686 U.

Aufgabe der Erfindung ist es, eine im Betrieb kostengünstige Straßenbaumaschine in Form eines Straßenfertigers oder eines Beschickerfahrzeugs für einen Straßenfertiger zur Verfügung zu stellen.

Diese Aufgabe wird durch die Merkmale des Anspruchs 1 gelöst. Vorteilhafte Weiterbildungen der Erfindung sind in den abhängigen Ansprüchen angegeben.

Die erfindungsgemäße Straßenbaumaschine liegt in Form eines Straßenfertigers oder eines Beschickerfahrzeugs für einen Straßenfertiger zum Fördern von Einbaumaterial zu einem Straßenfertiger vor, wobei die Straßenbaumaschine selbstfahrend ist und einen Fahrantrieb, einen Gutbunker und einen Führerstand umfasst, wobei die Straßenbaumaschine eine Photovoltaikanlage aufweist, wobei die Photovoltaikanlage mindestens ein Photovoltaikmodul zur Erzeugung von elektrischem Strom, einen Stromspeicher und einen Laderegler aufweist.

Ein Vorteil der erfindungsgemäßen Straßenbaumaschine ist das Senken der Energiekosten durch die Gewinnung der Energie durch eine Photovoltaikanlage. Ein weiterer Vorteil ist die Reduzierung der Umweltbelastungen, da weniger CO₂-Emissionen erzeugt werden. Ein weiterer Vorteil ist, dass die elektrischen Verbraucher oder Abnehmer autark versorgt werden können, wenn die Straßenbaumaschine ausgeschaltet ist.

Die Photovoltaikanlage kann eine technische Anlage zur Umwandlung von Sonnenenergie in elektrische Energie, bzw. Solarstrom sein. Die Photovoltaikanlage kann z.B. von 500 kWh bis 2.000 kWh Solarstrom pro Jahr erzeugen. Die Breite eines Photovoltaikmoduls kann z.B. 100 mm bis 1000 mm sein. Die Länge eines Photovoltaikmoduls kann z.B. 200 mm bis 2000 mm sein. Die Photovoltaikanlage kann mindestens einen Spannungswandler aufweisen. Ein Photovoltaikmodul kann z.B. 10 bis 100 Solarzellen aufweisen. Das Photovoltaikmodul kann steif sein, so dass es nicht gebogen werden kann. Das Photovoltaikmodul kann biegbar sein, so dass es gebogen werden kann. Das Photovoltaikmodul kann wenigstens eine Schutzschicht aufweisen. Das Photovoltaikmodul kann zwischen zwei Platten oder Schutzschichten angebracht sein. Die Schutzschicht kann eine Glasschicht, z.B. Einscheiben-Sicherheitsglas (ESG) oder eine transparente Kunststoffschicht aus Ethylenvinylacetat (EVA) aufweisen. Das Photovoltaikmodul kann rahmenlos sein. Das Photovoltaikmodul kann einen Rahmen aufweisen, was die Montage vereinfacht. Das Photovoltaikmodul kann ein steifes Gestell aufweisen. Die einander benachbarten Photovoltaikmodule können durch Befestigungsmittel miteinander verbunden werden. Die benachbarten Photovoltaikmodule können über eine Nut-Feder-Verbindung ineinandergeschoben werden. Das Photovoltaikmodul kann durch Befestigungsmittel und/oder ein Aufständerungssystem auf der Straßenbaumaschine eingehängt werden. Das Photovoltaikmodul kann mindestens einen elektrischen Anschluss aufweisen. Das Photovoltaikmodul kann mindestens eine Verkabelung aufweisen. Ein Laderegler und ein Akkumulator können in das Photovoltaikmodul integriert sein. Ein Spannungswandler kann in das Photovoltaikmodul integriert sein.

Die Photovoltaikmodule können an einem Teil der Straßenbaumaschine lösbar oder unlösbar befestigt sein. Die unlösbare Befestigung der Photovoltaikmodule kann über Schweißverbindungen, Lötverbindungen, Klebverbindungen, Nietverbindungen oder Press- und Schrumpfverbindungen umgesetzt werden. Ein Teil der Straßenbaumaschine kann durch das Photovoltaikmodul teilweise oder komplett ersetzt werden.

In einer vorteilhaften Ausführungsform ist an dem Führerstand ein Fahrerdach mit einem Hauptdachkörper angeordnet, wobei an dem Hauptdachkörper ein Photovoltaikmodul der Photovoltaikanlage, bevorzugt lösbar, befestigt ist oder der Hauptdachkörper mindestens teilweise durch ein Photovoltaikmodul der Photovoltaikanlage ausgebildet ist. Das Fahrerdach kann für ein senkrecht einfallendes Sonnenlicht eine optimale Photovoltaikmodulfläche zur Verfügung stellen. Durch lösbare Anbringung des Photovoltaikmoduls kann das Photovoltaikmodul einfach ausgetauscht oder wieder komplett abgebaut werden. Das Integrieren des Photovoltaikmoduls in den Hauptdachkörper oder das Ersetzen des Hauptdachkörpers kann einen Diebstahlschutz ermöglichen. Des Weiteren kann dies den Hauptdachkörper dichter und kompakter machen, was wiederum einen besseren Witterungsschutz ermöglicht. Mindestens eines der Photovoltaikmodule der Photovoltaikanlage kann an dem Fahrerdach unlösbar befestigt sein. Eine unlösbare Befestigung der Photovoltaikmodule kann über Schweißverbindungen, Lötverbindungen, Klebverbindungen, Nietverbindungen oder Press- und Schrumpfverbindungen umgesetzt werden.

In einer vorteilhaften Ausführungsform weist das Fahrerdach ein Erweiterungsmodul auf, wobei das Erweiterungsmodul an dem Hauptdachkörper von einer Stauposition zu einer Erweiterungsposition bewegbar, bevorzugt relativ zu dem Hauptdachkörper verschiebbar und/oder drehbar, angeordnet ist, wobei an dem Erweiterungsmodul ein Photovoltaikmodul der Photovoltaikanlage, bevorzugt lösbar, befestigt ist oder das Erweiterungsmodul mindestens teilweise durch ein Photovoltaikmodul der Photovoltaikanlage ausgebildet ist. Dadurch kann eine Breite des Fahrerdachs quer zu einer Fahrtrichtung und/oder eine Länge der Komponente entlang einer Fahrtrichtung erweitert werden. Damit kann eine große Schutzfläche vor Sonne und Regen für die Straßenbauarbeiter zur Verfügung gestellt werden. Des Weiteren kann durch die Erweiterung des Fahrerdachs mehr elektrischer Strom generiert werden, da jeweils das Hauptmodul und das Erweiterungsmodul ein Photovoltaikmodul aufweisen. Die Photovoltaikmodule können in der Stauposition von den Außenbedingungen geschützt werden. Die Breite der Komponente und/oder die Länge der Komponente kann im Wesentlichen horizontal erweitert werden. Die Breite der Komponente und/oder die Länge der Komponente kann z.B. bis um das 2-fache oder bis um das 5-fache erweitert werden. Erweiterungsmodule können an dem Hauptmodul mittels Schrauben, Klemmen, Schellen, Scharnierteilen, Gelenkarmen, Riemen, Gestell oder Schienen angebracht werden. Erweiterungsmodule können unterhalb und/oder oberhalb des Hauptkörperdachs angeordnet sein. Das Erweiterungsmodul kann eine Markise sein. Durch lösbare Anbringung des Photovoltaikmoduls kann das Photovoltaikmodul einfach ausgetauscht oder wieder komplett abgebaut werden. Das Integrieren des Photovoltaikmoduls in das Erweiterungsmodul oder das Ersetzen des Erweiterungsmoduls kann einen Diebstahlschutz ermöglichen.

In einer vorteilhaften Ausführungsform ist ein Photovoltaikmodul der Photovoltaikanlage an einer Außenwand eines Gutbunkers, bevorzugt lösbar, befestigt. Dadurch kann die Abdeckfläche der Straßenbaumaschine für das Gewinnen der elektrischen Energie optimal verwendet werden. Durch lösbare Anbringung des Photovoltaikmoduls kann das Photovoltaikmodul einfach ausgetauscht oder wieder komplett abgebaut werden. Mindestens eines der Photovoltaikmodule der Photovoltaikanlage kann an dem Gutbunker unlösbar befestigt sein. Eine unlösbare Befestigung der Photovoltaikmodule kann über Schweißverbindungen, Lötverbindungen, Klebverbindungen, Nietverbindungen oder Press- und Schrumpfverbindungen umgesetzt werden.

In einer vorteilhaften Ausführungsform ist ein Photovoltaikmodul der Photovoltaikanlage an einer Außenwand einer Motorverkleidung, bevorzugt lösbar, befestigt. Dadurch kann die Abdeckung der Straßenbaumaschine für das Gewinnen der elektrischen Energie optimal verwendet werden. Durch lösbare Anbringung des Photovoltaikmoduls kann das Photovoltaikmodul einfach ausgetauscht oder wieder komplett abgebaut werden. Mindestens eines der Photovoltaikmodule der Photovoltaikanlage kann an der Motorverkleidung unlösbar befestigt sein. Die unlösbare Befestigung der Photovoltaikmodule kann über Schweißverbindungen, Lötverbindungen, Klebverbindungen, Nietverbindungen oder Press- und Schrumpfverbindungen umgesetzt werden.

In einer vorteilhaften Ausführungsform ist die Straßenbaumaschine in Form des Straßenfertigers ausgebildet und weist eine Einbaubohle auf, wobei ein Photovoltaikmodul der Photovoltaikanlage an einem Grundbohlenkörper der Einbaubohle, bevorzugt lösbar, befestigt ist. Dadurch kann die Abdeckungen der Straßenbaumaschine für das Gewinnen der elektrischen Energie optimal verwendet werden. Durch lösbare Anbringung des Photovoltaikmoduls kann das Photovoltaikmodul einfach ausgetauscht oder wieder komplett abgebaut werden. Mindestens eines der Photovoltaikmodule der Photovoltaikanlage kann an der Einbaubohle unlösbar befestigt sein. Die unlösbare Befestigung der Photovoltaikmodule kann über Schweißverbindungen, Lötverbindungen, Klebverbindungen, Nietverbindungen oder Press- und Schrumpfverbindungen umgesetzt werden.

In einer vorteilhaften Ausführungsform ist ein Photovoltaikmodul der Photovoltaikanlage an mindestens einem an dem Grundbohlenkörper von einer Stauposition zu einer Erweiterungsposition verschiebbar angeordneten Ausziehteil, bevorzugt lösbar, befestigt. Dadurch kann die Photovoltaikanlage in der Erweiterungsposition eine größere Fläche für das Erzeugen von elektrischen Strom haben. Die Photovoltaikmodule können in der Stauposition vor den Außenbedingungen geschützt werden.

In einer vorteilhaften Ausführungsform ist ein Photovoltaikmodul der Photovoltaikanlage an mindestens einem an dem Grundbohlenkörper oder an dem Ausziehteil befestigten Bohlenerweiterungskörper, bevorzugt lösbar, befestigt. Dadurch kann die Photovoltaikanlage eine größere Fläche für das Erzeugen von elektrischem Strom haben.

In einer vorteilhaften Ausführungsform ist das Photovoltaikmodul eine abnehmbare Folie. Die Folie kann während des Straßenbaubetriebs angeklebt werden. Die Folie kann nach dem Straßenbaubetrieb oder für Wartungs- oder Reinigungsarbeiten abgenommen werden.

In einer vorteilhaften Ausführungsform umfasst das Photovoltaikmodul eine unlösbar an der Straßenbaumaschine befestigte Folie. Die unlösbare Befestigung der Photovoltaikmodule kann über Schweißverbindungen, Lötverbindungen, Klebverbindungen, Nietverbindungen oder Press- und Schrumpfverbindungen umgesetzt werden.

In einer Variante der Erfindung ist ein Stromnetz eines Straßenfertigers dazu konfiguriert, durch von der Straßenbaumaschine in Form des Beschickerfahrzeugs erzeugten elektrischen Strom gespeist zu werden. Der elektrische Verbraucher kann ein Kühlsystem sein. Das Kühlsystem kann für die Kühlung einer Batterie oder andere elektrische Verbraucher genutzt werden. Zudem kann mindestens ein elektrischer Verbraucher des Straßenfertigers dazu konfiguriert sein, durch von dem Beschickerfahrzeug erzeugten elektrischen Strom gespeist zu werden. Der elektrische Verbraucher kann eine Batterie sein. Der elektrische Verbraucher kann ein Heizkörper sein. Der Heizkörper kann für eine Bohlenheizung des Straßenfertigers verwendet werden. Der elektrische Verbraucher kann ein Bedienpanel sein. Der elektrische Verbraucher kann ein Projektor des Straßenfertigers sein, der dazu ausgebildet ist, mindestens einen am Bedienpanel eingestellten und/oder am Display angezeigten Prozessparameter auf mindestens eine Projektionsfläche zu projizieren. Der elektrische Verbraucher kann ein GPS-Gerät sein. Der elektrische Verbraucher kann ein Telematikgerät für ein Telematiksystem sein. Das Telematiksystem kann 24 Stunden an 7 Tagen Informationen zu Position, Geschwindigkeit, Kraftstoffverbrauch und Motoreffizienz aufzeichnen. Selbst bei längerem Stillstand der Straßenbaumaschine, wenn eine Fahrzeugbatterie leer ist, kann das Telematikgerät durch die Einspeisung mit dem Solarstrom funktionieren. Der elektrische Verbraucher kann eine Leuchte sein. Die Leuchte kann eine Lichtmarkierung sein, für den Nachtbaubetrieb um den Arbeitern den Zugangsbereich der Straßenbaumaschine zu zeigen oder wo sie nicht hintreten dürfen. Der elektrische Verbraucher kann ein Handygerät sein. Durch die Einspeisung mit dem Solarstrom können die elektrischen Verbraucher ohne zusätzliche Batterie oder Speisung von einer Fahrzeugbatterie oder Generator des Straßenfertigers funktionieren.

In einer anderen Variante der Erfindung ist ein Stromnetz eines Beschickerfahrzeugs dazu konfiguriert, durch von der Straßenbaumaschine in Form des Straßenfertigers erzeugten elektrischen Strom gespeist zu werden. Zudem kann mindestens ein elektrischer Verbraucher des Beschickerfahrzeugs dazu konfiguriert sein, durch von dem Straßenfertiger erzeugten elektrischen Strom gespeist zu werden. Der elektrische Verbraucher kann ein Kühlsystem sein. Das Kühlsystem kann für die Kühlung einer Batterie oder andere elektrische Verbraucher genutzt werden. Der elektrische Verbraucher kann eine Batterie sein. Der elektrische Verbraucher kann ein Heizkörper sein. Der Heizkörper kann für eine Heizung des Materialbunkers des Straßenfertigers verwendet werden. Der Heizkörper kann für die Heizung eines Fördersystems der Straßenbaumaschine verwendet werden. Der elektrische Verbraucher kann ein GPS-Gerät sein. Der elektrische Verbraucher kann ein Telematikgerät für ein Telematiksystem sein. Das Telematiksystem kann 24 Stunden an 7 Tagen Informationen zu Position, Geschwindigkeit, Kraftstoffverbrauch und Motoreffizienz aufzeichnen. Selbst bei längerem Stillstand der Straßenbaumaschine, wenn eine Fahrzeugbatterie leer ist, kann das Telematikgerät durch die Einspeisung mit dem Solarstrom funktionieren. Der elektrische Verbraucher kann eine Leuchte sein. Die Leuchte kann eine Lichtmarkierung sein, für den Nachtbaubetrieb um den Arbeitern den Zugangsbereich der Straßenbaumaschine zu zeigen oder wo sie nicht hintreten dürfen. Der elektrische Verbraucher kann ein Handygerät sein. Durch die Einspeisung mit dem Solarstrom können die elektrischen Verbraucher ohne zusätzliche Batterie oder Speisung von einer Fahrzeugbatterie oder Generator des Straßenfertigers funktionieren.

In einer vorteilhaften Ausführungsform ist mindestens eines der Photovoltaikmodule der Photovoltaikanlage relativ zu einem Teil der Straßenbaumaschine drehbar und/oder verschiebbar angeordnet. In einer vorteilhaften Ausführungsform ist mindestens eines der Photovoltaikmodule der Photovoltaikanlage relativ zu einem Teil der Straßenbaumaschine kippbar angeordnet. Dadurch können die Neigungen des Photovoltaikmoduls in Bezug auf den Teil der Straßenbaumaschine für das Gewinnen der elektrischen Energie optimal eingestellt werden.

Im Folgenden werden beispielhafte Ausführungsformen anhand der Figuren erläutert.

Dabei zeigt
- Fig. 1: eine schematische Perspektivansicht einer Straßenbaumaschine in Form eines Straßenfertigers mit einer Photovoltaikanlage,
- Fig. 2: eine schematische Perspektivansicht des Straßenfertigers,
- Fig. 3: eine schematische Teildraufsicht einer Einbaubohle des Straßenfertigers,
- Fig. 4: eine schematische Teildraufsicht der Einbaubohle des Straßenfertigers,
- Fig. 5: eine schematische Perspektivansicht einer Straßenbaumaschine in Form eines Beschickerfahrzeugs mit einer Photovoltaikanlage,
- Fig. 6: eine schematische Perspektivansicht des Beschickerfahrzeugs,

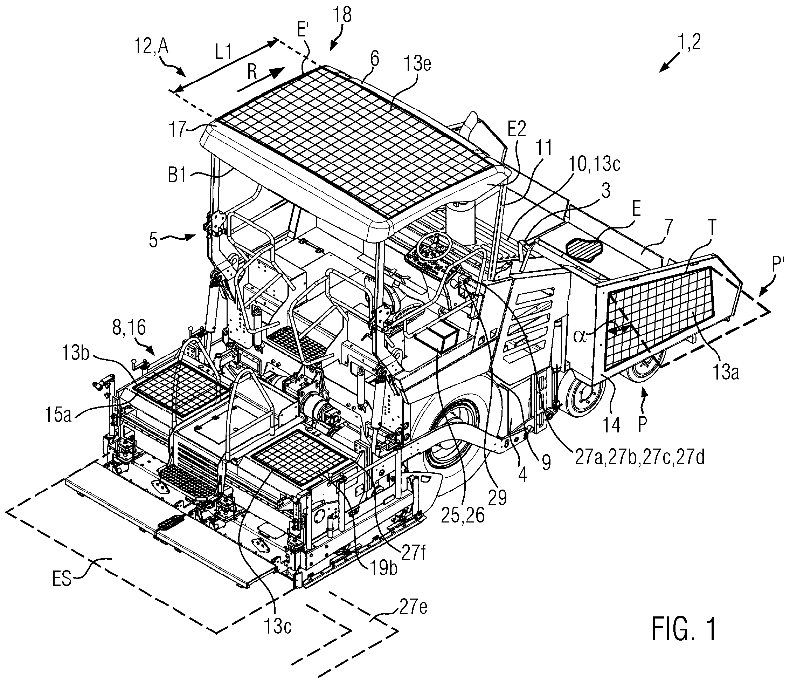

Figur 1 zeigt in perspektivischer Ansicht von schräg hinten eine Straßenbaumaschine 1, bei der es sich um einen Straßenfertiger 2 zur Herstellung einer Einbauschicht ES handelt. Der Straßenfertiger 2 ist selbstfahrend. Der Straßenfertiger 2 hat einen Fahrantrieb 3, ein Chassis 4, einen Führerstand 5, ein Fahrerdach 6, Arbeitsaggregate wie einen Gutbunker 7 zur Aufnahme eines Einbaumaterials B, eine an dem Chassis 4 höhenverstellbar gelagerte und in Fahrtrichtung R geschleppte Einbaubohle 8, eine Fördereinheit 9 um das Einbaumaterial B aus einem Gutbunker 7 des Straßenfertigers 2 der Einbaubohle 8 zur Verfügung zu stellen. Der Straßenfertiger 2 umfasst weitere Komponente sowie eine Motorraumverkleidung 10. Das Fahrerdach 6 überspannt den Führerstand 5, welches von einer Ständerstruktur 11 getragen wird. Die Ständerstruktur 11 kann faltbar sein.

Der Straßenfertiger 2 verfügt über eine Photovoltaikanlage 12 mit mehreren Photovoltaikmodulen 13. In einer Ausführungsform ist ein erstes Photovoltaikmodul 13a auf einer ersten Außenwand 14 des Gutbunkers 7 befestigt. In einer Ausführungsform kann das Photovoltaikmodul 13a an einer Befestigungskomponente T von einer ersten Position P zu einer zweiten Position P' drehbar angebracht werden, um einen Neigungswinkel α des Photovoltaikmoduls 13a zur Sonne auszurichten. Auf einer zweiten Außenwand (nicht gezeigt) kann ebenfalls ein Photovoltaikmodul (nicht gezeigt) befestigt werden.

Ein zweites und drittes Photovoltaikmodul 13b, 13c ist auf zwei Abdeckplatten 15a, 15b eines Grundbohlenkörpers 16 der Einbaubohle 8 befestigt. Ein viertes Photovoltaikmodul 13d ist auf der Motorraumverkleidung 10 angebracht. In einer nicht gezeigten Ausführungsform kann ein Neigungswinkel α der Photovoltaikmodule 13b, 13c, 13d ebenfalls einstellbar sein.

Ein fünftes Photovoltaikmodul 13e ist auf einem Hauptdachkörper 17 des Fahrerdachs 6 befestigt. In dieser Ausführungsform ist der Hauptdachkörper 17 eine Kunststoffplatte. Es ist auch möglich den Hauptdachkörper 17 komplett mit dem fünften Photovoltaikmodul 13e zu ersetzen, und das fünfte Photovoltaikmodul 13e direkt an der Ständerstruktur 11 zu fixieren.

Das Fahrerdach 6 hat eine erste Breite B1 und/oder eine erste Länge L1. Die erste Breite B1 und/oder eine erste Länge L1 des Fahrerdachs 6 kann erweitert werden um dem Bediener mehr Schutzfläche vor Sonne und Regen zur Verfügung zu stellen und gleichzeitig eine erste Abdeckfläche A der Photovoltaikanlage 12 zu erweitern (Die Abdeckfläche A entspricht einer gesamten von außen sichtbar aufgestellten Photovoltaikmodulfläche der Photovoltaikanlage 12). Zu diesem Zweck verfügt das Fahrerdach 6 über zwei seitlich ausziehbar an dem Hauptdachkörper 17 angeordnete Erweiterungsmodule E1, E2, beispielweise Markisen. In der Figur 1 sind die Erweiterungsmodule E1, E2 in deren Stauposition 18, wo sie unter dem Hauptdachkörper 17 aufbewahrt sind.

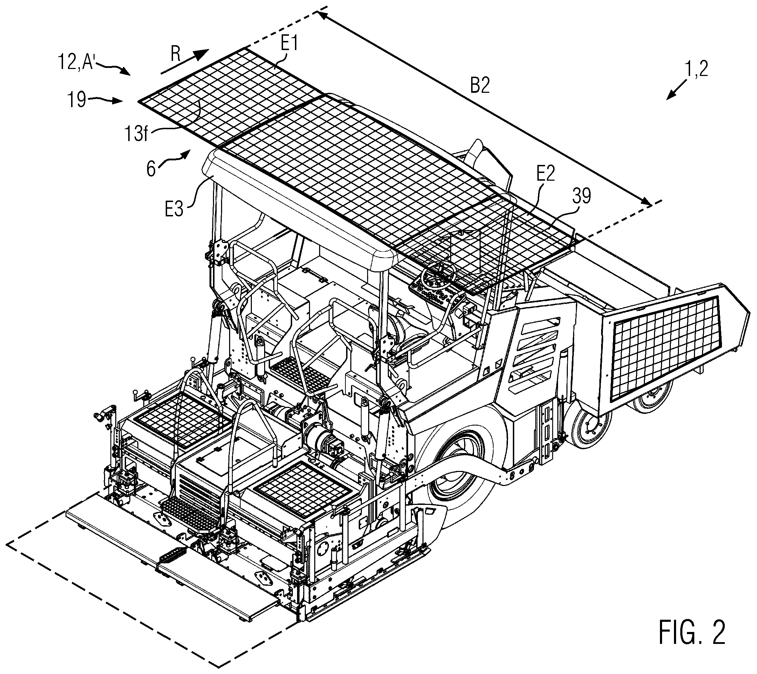

Figur 2 zeigt die Erweiterungsmodule E1, E2 des Fahrerdachs 6 in einer Erweiterungsposition 19. Hier hat das Fahrerdach 6 eine zweite Breite B2, die größer als die erste Breite B1 ist. Das Erweiterungsmodul E1 verfügt über ein sechstes Photovoltaikmodul 13f. Das Erweiterungsmodul E2 verfügt über ein siebtes Photovoltaikmodul 13g. Die Photovoltaikanlage 12 hat eine erweiterte Abdeckfläche A', wenn sich die Erweiterungsmodule E1, E2 in deren Erweiterungsposition 19 befinden. In der Stauposition 18 werden die Photovoltaikmodule 13f, 13g vor Außenbedingungen geschützt.

Eine erste Länge L1 des Fahrerdachs 6 kann entlang der Fahrtrichtung R verlängert werden z.B. durch ein entlang der Fahrtrichtung R ausziehbar angeordnetes Erweiterungsmodul E3 umfassend ein Photovoltaikmodul 13.

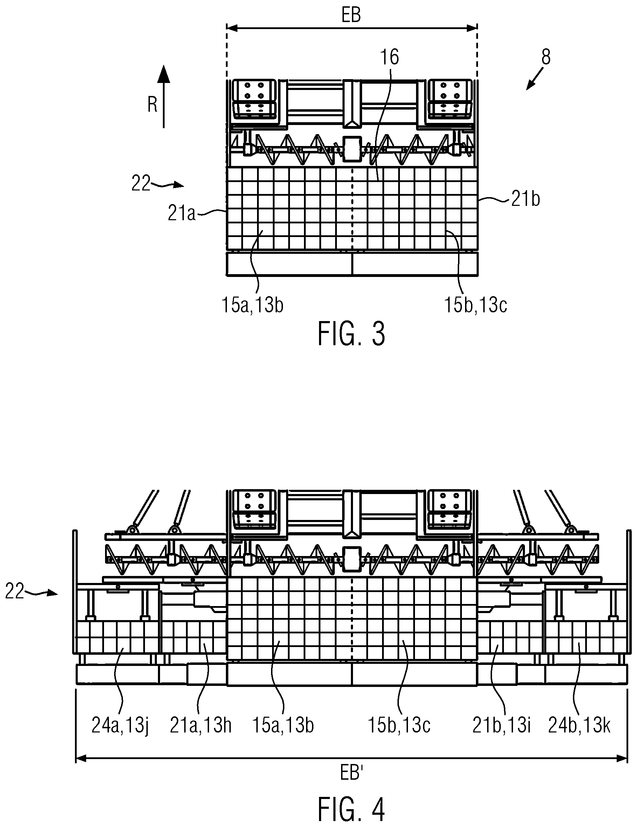

Fig. 3 zeigt eine Ausführungsform der Einbaubohle 8, wobei zwei seitlich an dem Grundbohlenkörper 16 bewegbar angeordnete Ausziehteile 21a, 21b in deren Stauposition 22 sind. Das zweite und dritte Photovoltaikmodul 13b, 13c ist auf zwei Abdeckplatten 15a, 15b eines Grundbohlenkörpers 16 der Einbaubohle 8 befestigt. Eine Einbaubreite EB der Einbaubohle 8 kann in eine Richtung quer zur Fahrtrichtung R des Straßenfertigers 2 variiert werden, um unterschiedliche Einbaubreiten erzielen zu können. Für diesen Zweck können die Ausziehteile 21a, 21b von deren Stauposition 22 zu einer Erweiterungsposition 23 ausgefahren werden.

Fig. 4 zeigt die Ausziehteile 21a, 21b in deren Erweiterungsposition 23 quer zu der Fahrtrichtung R ausgefahren. Die Ausziehteile 21a, 21b verfügen über Photovoltaikmodule 13h, 13i, die in der Erweiterungsposition 23 der Ausziehteile 21a, 21b zur Sonne ausgesetzt sind um elektrischen Strom S zu erzeugen. In der Stauposition 22 werden die Photovoltaikmodule 13h, 13i vor Außenbedingungen geschützt.

Um die Einbaubreite EB' der Einbaubohle 8 weiter zu vergrößern, können an den Ausziehteilen 21a, 21b Bohlenerweiterungskörper 24a, 24b befestigt werden. Die Bohlenerweiterungskörper 24a, 24b können auch über Photovoltaikmodule 13j, 13k verfügen.

Die Photovoltaikanlage 12 weist einen Stromspeicher 25 auf (siehe Fig.1). Die Photovoltaikanlage 12 weist des Weiteren einen Laderegler 26 auf, um den Stromspeicher 25 vor Überladung zu schützen. Die Photovoltaikmodule 13a-k können über Verkabelungen (nicht gezeigt) an den Laderegler 26 angeschlossen werden, der an den Stromspeicher 25 angeschlossen ist.

Der Straßenfertiger 2 kann über mehrere elektrische Verbraucher 27 verfügen, die durch von der Photovoltaikanlage 12 erzeugten elektrischen Strom S gespeist werden. Ein elektrischer Verbraucher 27 kann ein Telematikmodul 27a sein. Ein elektrischer Verbraucher 27 kann ein globales Positionsbestimmungssystem (GPS)-Gerät 27b sein. Ein elektrischer Verbraucher EV kann eine Kühlanlage 27c zur Kühlung einer Fahrzeugbatterie 27d sein. Ein elektrischer Verbraucher 27 kann eine Leuchte 27e sein, insbesondere zur Beleuchtung des Zugangsbereichs 28 des Straßenfertigers 2 in den Nachtbaustellen. Ein elektrischer Verbraucher 27 kann ein Heizkörper 27f sein. Der Heizkörper 27f kann zum Aufwärmen der Einbaubohle 8 verwendet werden. Der von der Photovoltaikanlage 12 gewonnene elektrische Strom S kann in ein Stromnetz 29 des Straßenfertigers 2 eingespeist werden.

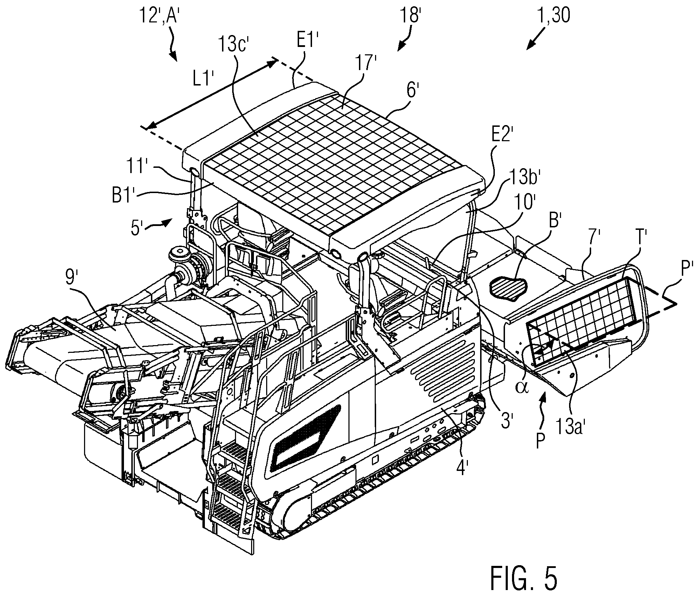

Figur 5 zeigt in perspektivischer Ansicht von schräg hinten eine Straßenbaumaschine 1, bei der es sich um ein Beschickerfahrzeug 30 für einen Straßenfertiger 2 handelt. Das Beschickerfahrzeug 30 ist selbstfahrend und umfasst einen Fahrantrieb 3', ein Chassis 4', einen Führerstand 5', ein Fahrerdach 6', Arbeitsaggregate wie einen Gutbunker 7' zur Aufnahme eines Einbaumaterials B', sowie eine Fördereinheit 9' um das Einbaumaterial B', aus dem Gutbunker 7' des Beschickerfahrzeugs 30 in den Gutbunker 7 des Straßenfertigers 2 zu transportieren. Das Beschickerfahrzeug 30 umfasst eine Motorraumverkleidung 10'. Das Fahrerdach 6' überspannt den Führerstand 5', welcher von einer Ständerstruktur 11' getragen wird. Die Ständerstruktur 11' kann faltbar sein.

Das Beschickerfahrzeug 30 verfügt über eine Photovoltaikanlage 12' mit mehreren Photovoltaikmodulen 13'. In einer Ausführungsform ist ein erstes Photovoltaikmodul 13a' auf einer ersten Außenwand 14' des Gutbunkers 7' befestigt. In einer Ausführungsform kann das Photovoltaikmodul 13a' an einer Befestigungskomponente T' von einer ersten Position P' zu einer zweiten Position P' drehbar angebracht werden, um einen Neigungswinkel α' des Photovoltaikmoduls 13a' zur Sonne auszurichten. Auf einer zweiten Außenwand (nicht gezeigt) kann ebenfalls ein Photovoltaikmodul (nicht gezeigt) befestigt werden. Ein zweites Photovoltaikmodul 13b' ist auf der Motorraumverkleidung 10' angebracht. In einer nicht gezeigten Ausführungsform kann ein Neigungswinkel α der Photovoltaikmodule 13b' ebenfalls einstellbar sein.

Ein drittes Photovoltaikmodul 13c' ist auf einem Hauptdachkörper 17 des Fahrerdachs 6' befestigt. In dieser Ausführungsform ist der Hauptdachkörper 17' eine Kunststoffplatte. Es ist auch möglich den Hauptdachkörper 17' komplett mit dem dritten Photovoltaikmodul 13c' zu ersetzen, und das dritte Photovoltaikmodul 13c' direkt an der Ständerstruktur 11' zu fixieren.

Das Fahrerdach 6' hat eine erste Breite B1' und/oder eine erste Länge L1'. Die erste Breite B1' und/oder eine erste Länge L1' des Fahrerdachs 6' kann erweitert werden um dem Bediener mehr Schutzfläche vor Sonne und Regen zur Verfügung zu stellen und gleichzeitig eine erste Abdeckfläche A" der Photovoltaikanlage 12' zu erweitern (Die Abdeckfläche A'' entspricht einer gesamten von außen sichtbar aufgestellten Photovoltaikmodulfläche der Photovoltaikanlage 12'). Zu diesem Zweck verfügt das Fahrerdach 6' über zwei seitlich ausziehbar an dem Hauptdachkörper 17' angeordnete Erweiterungsmodule E1', E2', beispielsweise Markisen. In der Figur 5 sind die Erweiterungsmodule E1', E2' in deren Stauposition 18', wo sie unter dem Hauptdachkörper 17' aufbewahrt sind.

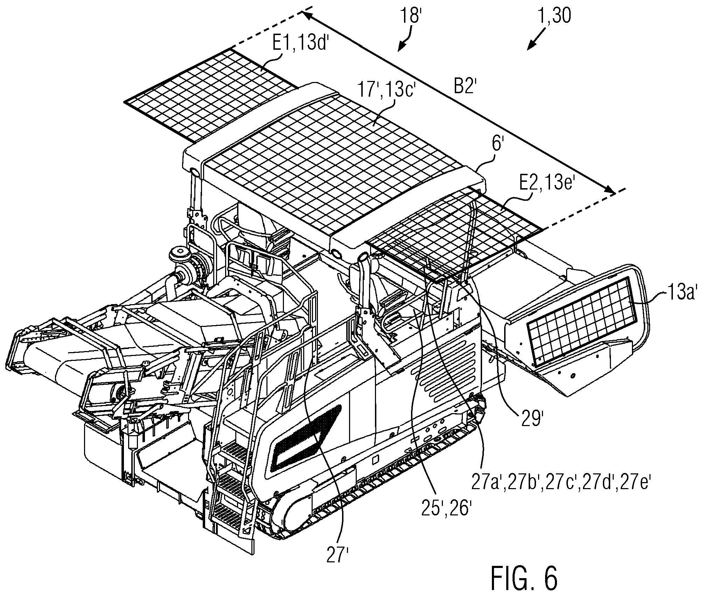

Figur 6 zeigt die Erweiterungsmodule E1', E2' des Fahrerdachs 6' in einer Erweiterungsposition 19'. Das Erweiterungsmodul E1' verfügt über ein viertes Photovoltaikmodul 13d'. Das Erweiterungsmodul E2' verfügt über ein fünftes Photovoltaikmodul 13e'.

Hier hat das Fahrerdach 6' eine zweite Breite B2', die größer als die erste Breite B1' ist. Die Photovoltaikanlage 12' hat eine erweiterte Abdeckfläche A‴, wenn sich die Erweiterungsmodule E1, E2 in deren Erweiterungsposition 19' befinden. In der Stauposition 18' werden die Photovoltaikmodule 13d', 13e' vor Außenbedingungen geschützt.

Eine erste Länge L1' des Fahrerdachs 6' kann entlang einer Fahrtrichtung R' verlängert werden z.B. durch ein entlang der Fahrtrichtung R' ausziehbar angeordnetes Erweiterungsmodul E3' umfassend ein Photovoltaikmodul.

Die Photovoltaikanlage 12' weist einen Stromspeicher 25' auf. Die Photovoltaikanlage 12' weist des Weiteren einen Laderegler 26' auf, um den Stromspeicher 25' vor Überladung zu schützen. Die Photovoltaikmodule 13a-e' können über Verkabelungen (nicht gezeigt) an den Laderegler 26' angeschlossen werden, der an dem Stromspeicher 25' angeschlossen ist.

Das Beschickerfahrzeug 30 kann über mehrere elektrische Verbraucher 27' verfügen, die durch von der Photovoltaikanlage 12' erzeugten elektrischen Strom S' gespeist werden. Ein elektrischer Verbraucher 27' kann ein Telematikmodul 27a'sein. Ein elektrischer Verbraucher 27' kann ein globales Positionsbestimmungssystem (GPS)-Gerät 27b' sein. Ein elektrischer Verbraucher 27' kann eine Kühlanlage 27c' zur Kühlung einer Fahrzeugbatterie 27d' sein. Ein elektrischer Verbraucher 27' kann eine Leuchte 27e' sein, insbesondere zur Beleuchtung des Zugangsbereichs 28 des Beschickerfahrzeugs 30 in den Nachtbaustellen. Ein elektrischer Verbraucher 27' kann ein Heizkörper 27f' sein. Der Heizkörper 27f' kann zum Aufwärmen der Gutbunker 7' oder Fördereinheit 9' verwendet werden. Der von der Photovoltaikanlage 12' gewonnene elektrische Strom S' kann in ein Stromnetz 29' des Beschickerfahrzeugs 30 eingespeist werden.

Es ist auch möglich, dass während eines Straßenbaubetriebs das Beschickerfahrzeug 30 in der Fahrtrichtung R' vor dem Straßenfertiger 2 positioniert ist, um Einbaumaterial B' aus dem Gutbunker 7' des Beschickerfahrzeugs 30 in den Gutbunker 7 des Straßenfertigers 2 zu transportieren. Dabei kann der von der Photovoltaikanlage 12' gewonnene elektrische Strom S' des Beschickerfahrzeugs 30 in ein Stromnetz 29 des Straßenfertigers 2 eingespeist werden oder der von der Photovoltaikanlage 12 gewonnene elektrische Strom S des Straßenfertigers 2 in ein Stromnetz 29' des Beschickerfahrzeugs 30 eingespeist werden.

## Patentansprüche

1. Kombination einer ersten Straßenbaumaschine (1) in Form eines Straßenfertigers (2) und einer zweiten Straßenbaumaschine in Form eines Beschickerfahrzeugs (30) zum Fördern von Einbaumaterial (B, B') zu dem Straßenfertiger (2), wobei die erste und die zweite Straßenbaumaschine (1) jeweils selbstfahrend ist und einen Fahrantrieb (3, 3'), einen Gutbunker (7, 7') und einen Führerstand (5, 5') umfasst, **dadurch gekennzeichnet, dass** mindestens eine der beiden Straßenbaumaschinen (1) eine Photovoltaikanlage (12, 12') aufweist, wobei die Photovoltaikanlage (12, 12') mindestens ein Photovoltaikmodul (13, 13') zur Erzeugung von elektrischem Strom (S, S'), einen Stromspeicher (25, 25') und einen Laderegler (26, 26') aufweist,
und dass die andere der beiden Straßenbaumaschinen (1) ein Stromnetz (29, 29') aufweist, das dazu konfiguriert ist, durch von der ersten Straßenbaumaschine (1) erzeugten elektrischen Strom (S, S') gespeist zu werden.

2. Kombination nach Anspruch 1, **dadurch gekennzeichnet, dass** an dem Führerstand (5, 5') ein Fahrerdach (6, 6') mit einem Hauptdachkörper (17, 17') angeordnet ist, wobei an dem Hauptdachkörper (17, 17') ein Photovoltaikmodul (13e, 13e') der Photovoltaikanlage (12, 12'), bevorzugt lösbar, befestigt ist oder der Hauptdachkörper (17, 17') mindestens teilweise durch ein Photovoltaikmodul (13e, 13c') der Photovoltaikanlage (12, 12') ausgebildet ist.

3. Kombination nach Anspruch 2, **dadurch gekennzeichnet, dass** das Fahrerdach (6, 6') ein Erweiterungsmodul (E1, E1, E1', E2') aufweist, wobei das Erweiterungsmodul (E1, E2, E1', E2') an dem Hauptdachkörper (17, 17') von einer Stauposition (18, 18') zu einer Erweiterungsposition (19, 19') bewegbar, bevorzugt relativ zu dem Hauptdachkörper (17, 17') verschiebbar und/oder drehbar, angeordnet ist, wobei an dem Erweiterungsmodul (E1, E2, E1', E2') ein Photovoltaikmodul (13f, 13g, 13d', 13e') der Photovoltaikanlage (12, 12'), bevorzugt lösbar, befestigt ist oder das Erweiterungsmodul (13e, 13c') mindestens teilweise durch ein Photovoltaikmodul (13f, 13g, 13d', 13e') der Photovoltaikanlage (12, 12') ausgebildet ist.

4. Kombination nach einem der vorangehenden Ansprüche, **dadurch gekennzeichnet, dass** ein Photovoltaikmodul (13, 13d') der Photovoltaikanlage (12, 12') an einer Außenwand (14, 14') eines Gutbunkers (7, 7'), bevorzugt lösbar, befestigt ist.

5. Kombination nach einem der vorangehenden Ansprüche, **dadurch gekennzeichnet, dass** ein Photovoltaikmodul (13d, 13b') der Photovoltaikanlage (12, 12') an einer Motorverkleidung (10, 10') der Straßenbaumaschine (1), bevorzugt lösbar, befestigt ist.

6. Kombination nach einem der vorangehenden Ansprüche, **dadurch gekennzeichnet, dass** die erste Straßenbaumaschine (1) in Form des Straßenfertigers (2) ausgebildet ist und eine Einbaubohle (8) aufweist, wobei ein Photovoltaikmodul (13b, 13c) der Photovoltaikanlage (12) an einem Grundbohlenkörper (16) der Einbaubohle (8), bevorzugt lösbar, befestigt ist.

7. Kombination nach Anspruch 6, **dadurch gekennzeichnet, dass** ein Photovoltaikmodul (13h, 13i) der Photovoltaikanlage (12) an mindestens einem an dem Grundbohlenkörper (16) von einer Stauposition (18) zu einer Erweiterungsposition (19) verschiebbar angeordneten Ausziehteil (21a, 21b), bevorzugt lösbar, befestigt ist.

8. Kombination nach Anspruch 6 oder 7, **dadurch gekennzeichnet, dass** ein Photovoltaikmodul (13j, 13k) der Photovoltaikanlage (12) an mindestens einem an dem Grundbohlenkörper (16) oder an dem Ausziehteil (21a, 21b) befestigten Bohlenerweiterungskörper (24a, 24b), bevorzugt lösbar, befestigt ist.

9. Kombination nach einem der vorangehenden Ansprüche, **dadurch gekennzeichnet, dass** mindestens eines der Photovoltaikmodule (13, 13') der Photovoltaikanlage (12, 12') relativ zu einem Teil (4, 4', 6, 6', 7, 7', 8, 10, 10') der Straßenbaumaschine (1), an welcher das Photovoltaikmodul (13, 13') vorgesehen ist, drehbar und/oder verschiebbar angeordnet ist.

## Claims

1. Combination of a first road making machine (1) in the form of a road finishing machine (2) and a second road making machine in the form of a charger vehicle (30) for conveying paving material (B, B') to the road finishing machine (2), wherein the first and the second road making machine (1) are each self-propelled and comprise a travel drive (3, 3'), a material bunker (7, 7') and a driver stand (5, 5'), **characterized in that** at least one of the two road making machines (1) includes a photovoltaic system (12, 12') comprising at least one photovoltaic module (13, 13') for generating electric current (S, S'), a power storage system (25, 25') and a charge controller (26, 26'),
and **in that** the other of the two road making machines (1) includes a power grid (29, 29') configured to be fed with electric current (S, S') generated by the first road making machine (1).

2. Combination according to claim 1, **characterized in that** a driver roof (6, 6') with a main roof body (17, 17') is arranged at the driver stand (5, 5'), wherein a photovoltaic module (13e, 13e') of the photovoltaic system (12, 12'), preferably in a releasable manner, is fastened to the main roof body (17, 17') or the main roof body (17, 17') is at least partially embodied by a photovoltaic module (13e, 13c') of the photovoltaic system (12, 12').

3. Combination according to claim 2, **characterized in that** the driver roof (6, 6') includes an extension module (E1, E1', E2'), wherein the extension module (E1, E2, E1', E2') is arranged at the main roof body (17, 17') to be movable from a storage position (18, 18') to an extension position (19, 19'), preferably shiftable and/or rotatable relative to the main roof body (17, 17'), wherein a photovoltaic module (13f, 13g, 13d', 13e') of the photovoltaic system (12, 12'), preferably in a releasable manner, is fastened to the extension module (E1, E2, **E1',** E2') or the extension module (13e, 13c') is at least partially embodied by a photovoltaic module (13f, 13g, 13d', 13e') of the photovoltaic system (12, 12').

4. Combination according to one of the preceding claims, **characterized in that** a photovoltaic module (13, 13d') of the photovoltaic system (12, 12') is fastened to an external wall (14, 14') of a material bunker (7, 7'), preferably in a releasable manner.

5. Combination according to one of the preceding claims, **characterized in that** a photovoltaic module (13d, 13b') of the photovoltaic system (12, 12') is fastened to an engine cowling (10, 10') of the road making machine (1), preferably in a releasable manner.

6. Combination according to one of the preceding claims, **characterized in that** the first road making machine (1) in the form of the road finishing machine (2) is embodied and includes a screed (8), wherein a photovoltaic module (13b, 13c) of the photovoltaic system (12) is fastened to a basic screed body (16) of the screed (8), preferably in a releasable manner.

7. Combination according to claim 6, **characterized in that** a photovoltaic module (13h, 13i) of the photovoltaic system (12) is fastened to at least one pull-out part (21a, 21b) arranged at the basic screed body (16) to be shiftable from a storage position (18) to an extension position (19), preferably in a releasable manner.

8. Combination according to claim 6 or 7, **characterized in that** a photovoltaic module (13j, 13k) of the photovoltaic system (12) is fastened to at least one screed extension body (24a, 24b) fastened to the basic screed body (16) or to the pull-out part (21a, 21b), preferably in a releasable manner.

9. Combination according to one of the preceding claims, **characterized in that** at least one of the photovoltaic modules (13, 13') of the photovoltaic system (12, 12') is arranged to be rotatable and/or shiftable relative to a portion (4, 4', 6, 6', 7, 7', 8, 10, 10') of the road making machine.

## Revendications

1. Combinaison d'une première machine de construction routière (1) sous forme d'un finisseur d'asphalte (2) et d'une deuxième machine de construction routière sous forme d'un véhicule d'alimenteur mobile (30) destiné à acheminer du matériau de pose (B, B') au finisseur d'asphalte (2), dans laquelle la première et la deuxième machine de construction routière (1) sont chacune automotrices et comportent un entraînement moteur (3, 3'), une trémie de matériau (7, 7') et un poste de conduite (5, 5'), **caractérisée en ce qu'**au moins l'une des deux machines de construction routière (1) comporte une installation photovoltaïque (12, 12') comprenant au moins un module photovoltaïque (13, 13') pour la production d'électricité (S, S'), un dispositif de stockage d'électricité (25, 25') et un régulateur de charge (26, 26'),
et **en ce que** l'autre des deux machines de construction routière (1) comporte un réseau électrique (29, 29') configuré pour être alimenté par le courant électrique (S, S') généré par la première machine de construction routière (1).

2. Combinaison selon la revendication 1, **caractérisée en ce qu'**un toit de conducteur (6, 6') avec un corps de toit principal (17, 17') est agencé sur le poste de conduite (5, 5'), dans laquelle un module photovoltaïque (13e, 13e') de l'installation photovoltaïque (12, 12') est fixé, de préférence de façon amovible, au corps de toit principal (17, 17') ou le corps de toit principal (17, 17') est constitué au moins partiellement d'un module photovoltaïque (13e, 13c') de l'installation photovoltaïque (12, 12').

3. Combinaison selon la revendication 2, **caractérisée en ce que** le toit de conducteur (6, 6') comporte un module d'extension (E1, E1', E2'), dans laquelle le module d'extension (E1, E2, E1', E2') est agencé sur le corps de toit principal (17, 17') de manière à pouvoir se déplacer d'une position de stockage (18, 18') à une position d'extension (19, 19'), de préférence de façon coulissante et/ou rotative par rapport au corps de toit principal (17, 17'), dans laquelle un module photovoltaïque (13f, 13g, 13d', 13e') de l'installation photovoltaïque (12, 12') est fixé, de préférence de façon amovible, au module d'extension (E1, E2, E1', E2') ou le module d'extension (13e, 13c') est constitué au moins partiellement d'un module photovoltaïque (13f, 13g, 13d', 13e') de l'installation photovoltaïque (12, 12').

4. Combinaison selon l'une des revendications précédentes, **caractérisée en ce qu'**un module photovoltaïque (13, 13d') de l'installation photovoltaïque (12, 12') est fixé, de préférence de façon amovible, à une paroi externe (14, 14') d'une trémie de matériau (7, 7').

5. Combinaison selon l'une des revendications précédentes, **caractérisée en ce qu'**un module photovoltaïque (13d, 13b') de l'installation photovoltaïque (12, 12') est fixé, de préférence de façon amovible, sur un capot moteur (10, 10') de la machine de construction routière (1).

6. Combinaison selon l'une des revendications précédentes, **caractérisée en ce que** la première machine de construction routière (1) est réalisée sous forme de finisseur d'asphalte (2) et comporte une poutre lisseuse (8), dans laquelle un module photovoltaïque (13b, 13c) de l'installation photovoltaïque (12) est fixé, de préférence de façon amovible, à un corps de poutre de base (16) de la poutre lisseuse (8).

7. Combinaison selon la revendication 6, **caractérisée en ce qu'**un module photovoltaïque (13h, 13i) de l'installation photovoltaïque (12) est fixé, de préférence de façon amovible, à au moins une partie extensible (21a, 21b) agencée de façon coulissante sur le corps de poutre de base (16) depuis une position de stockage (18) jusqu'à une position d'extension (19).

8. Combinaison selon la revendication 6 ou 7, **caractérisée en ce qu'**un module photovoltaïque (13j, 13k) de l'installation photovoltaïque (12) est fixé, de préférence de façon amovible, à au moins un corps d'extension de poutre (24a, 24b) fixé au corps de poutre de base (16) ou à la partie extensible (21a, 21b).

9. Combinaison selon l'une des revendications précédentes, **caractérisée en ce qu'**au moins l'un des modules photovoltaïques (13, 13') de l'installation photovoltaïque (12, 12') est agencé de façon rotative et/ou coulissante par rapport à une partie (4, 4', 6, 6', 7, 7', 8, 10, 10') de la machine de construction routière.
